Europäisches Patentamt

European Patent Office

Office européen des brevets

(19)

(11) Publication number: **0 259 898 B1**

# EUROPEAN PATENT SPECIFICATION

(45) Date of publication of patent specification: **17.04.91**    (51) Int. Cl.⁵: **G01D  5/251**, D03D 51/28, G01B 7/00

(21) Application number: **87201049.1**

(22) Date of filing: **04.06.87**

(54) **Method and device for determining the location of warp break weaving looms.**

(30) Priority: **20.06.86 BE 60999**

(43) Date of publication of application:
**16.03.88 Bulletin  88/11**

(45) Publication of the grant of the patent:
**17.04.91 Bulletin  91/16**

(84) Designated Contracting States:
**CH DE ES FR GB IT LI LU NL**

(56) References cited:
**GB-A- 1 133 757**
**GB-A- 2 117 017**

(73) Proprietor: **Picanol N.V.**
**Polenlaan 3-7**
**B-8900 Ieper(BE)**

(72) Inventor: **Dewaele, Stefan**
**Vennestraat 97**
**B-8500 Kortrijk(BE)**

(74) Representative: **Donné, Eddy**
**M.F.J.Bockstael Arenbergstraat 13**
**B-2000 Anvers(BE)**

## Description

The present invention concerns a method for determining the location of a warp break in weaving looms, and more specially in weaving looms whereby use is made of a warp detector that is equipped with several warp detector slats which are suspended to the warp threads, in such a way that in case of warp break the corresponding warp detector slat can fall on a contact element, resulting in making an electrical contact between two electrodes As the aforesaid warp detector slats are forming a large and compact package, it is very difficult for the weaver to retrieve the fallen slat. The present invention concerns thus a device and a method giving the possibility of retrieving in a reliable way the location or locations where the aforesaid electrodes are electrically connected by a fallen slat or slats.

It is already known that electro-mechanical devices can be used to this end like, for instance, a carriage running under the slat package, the movement of which is interrupted at the moment that it detects a fallen slat. These devices have, however, the disadvantage that they comprise a lot of moving parts, that they are bulky and very sensible for defects and wear. Moreover, they are relatively expensive.

According to the GB Patent Application No 2.117.017 each contact element is subdivided several times in its longitudinal direction and light emitting diodes are provided to bridge the gaps at the points of subdivision. In this way it is possible to indicate by means of said diodes the section in which a thread is broken. This system is accurate only when sections of very short longitudinal length are provided. The latter requires a large number of subdivisions.

According to the Japanese Patent Nr 60-81355 the use of the potentiometer principle is already known in order to determine the location of a fallen warp detector slat. In this case, one of the aforesaid electrodes is designed as a resistor, while a fallen slat and the other electrode play the part of the middle tapping of the potentiometer. Consequently, a well determined voltage is applied to the electrode that is acting as a resistor, while the partial voltage is measured between one end of this latter electrode and the warp detector slat. This partial voltage gives thus a measurement of the distance where the warp detector slat is located from one end of the electrode. This invention has also the disadvantage that, if the contacts between the fallen warp detector slats and the electrodes are dirty, for instance because dust particles are produced by the weaving operation, or if the slat is falling the wrong way round, the measurement results of the partial voltage and thus also the location indication related to the fallen slat become unreliable.

If indeed dust is accumulated between the aforesaid contacts or if the slat is falling on the wrong way, contact resistance can occur, which can strongly differ from each other and which can be of the same order of magnitude as the internal resistance of the measurement device used for determining the partial voltage, whereby the resulting measurement values can show variations of 50% or still more.

The present invention foresees thus, first of all a method for determining the location of a warp break in weaving looms, whereby the aforesaid disadvantages and still other ones are systematically avoided and more specially the influence of the contact resistance. According to the invention, use is made for this method of a warp detector already known that is composed of a contact element made of two essential parallel electrodes and several warp detector slats that can locally connect the electrodes in fallen condition, whereby at least one of the aforesaid electrodes has an electrical resistance which is not negligible. The invention relates to a method for determining the location of a warp break in weaving looms, whereby use is made of a warp detector composed of a contact element that is made of two essentially parallel electrodes,and several warp detector slats which are suspended to the warp threads and which can fall in the case of a warp thread break on the aforesaid contact element in order to achieve an electrical contact between the electrodes, and comprising the application of a voltage between the electrodes of the said contact element, characterised by the fact that the method mainly comprises the application of said voltage between the electrodes on each end of the contact element, whereby current circuits are created at both sides of a fallen warp detector slat; the direct or indirect determination of the values of the currents in said current circuits and/or values proportional to these currents; and the calculation from these values of the location of the fallen warp detector slat.

Moreover, the present invention also concerns devices for bringing the aforesaid methods into practice. These devices will be described with more detail herebelow with reference to the figures in appendix.

In order that the characteristics of the invention are better understood, a few preferred embodiments will be described herebelow with reference to the figures in appendix illustrating respectively :

figure 1 a cross-section of a conventional warp detector;

figure 2 a schematic view of a device in accordance with the invention;

figures 3 and 4 electrical equivalents of the device according to figure 2;

figure 5 an alternative solution of the embodiment according to figure 2;

figure 6 still another device in accordance with the invention.

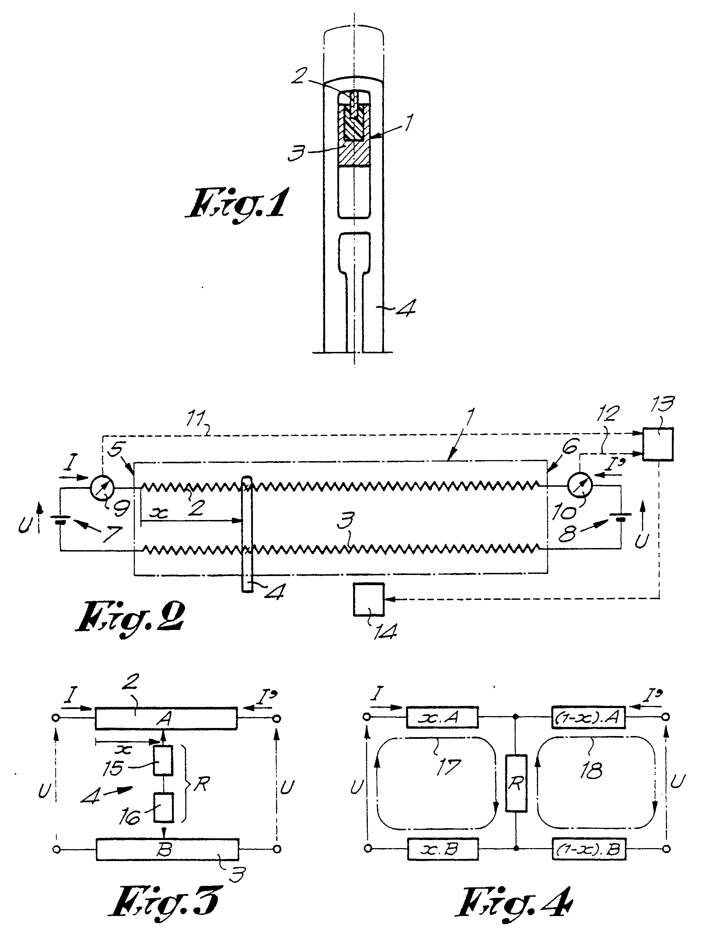

Figure 1 illustrates a conventional warp detector that is composed, as already known, of a contact element 1 which is mainly made of two electrodes 2 and 3, electrically insulated from each other and of a warp detector slat 4 that in fallen condition, as illustrated on figure 1 can achieve a connection between the aforesaid electrodes 2 and 3. The method and the device in accordance with the invention make thus use of similar warp detectors, whereby at least one of the electrodes 2 and 3 has a non-negligible resistance, in such a way that a location determination can be carried out. Preferably, the electrode resistance is comprised between 5000 ohm/m and 1 mega-ohm/m. This said value is approximately equal to 1/10 of the contact resistance between a warp detector slat and the electrodes.

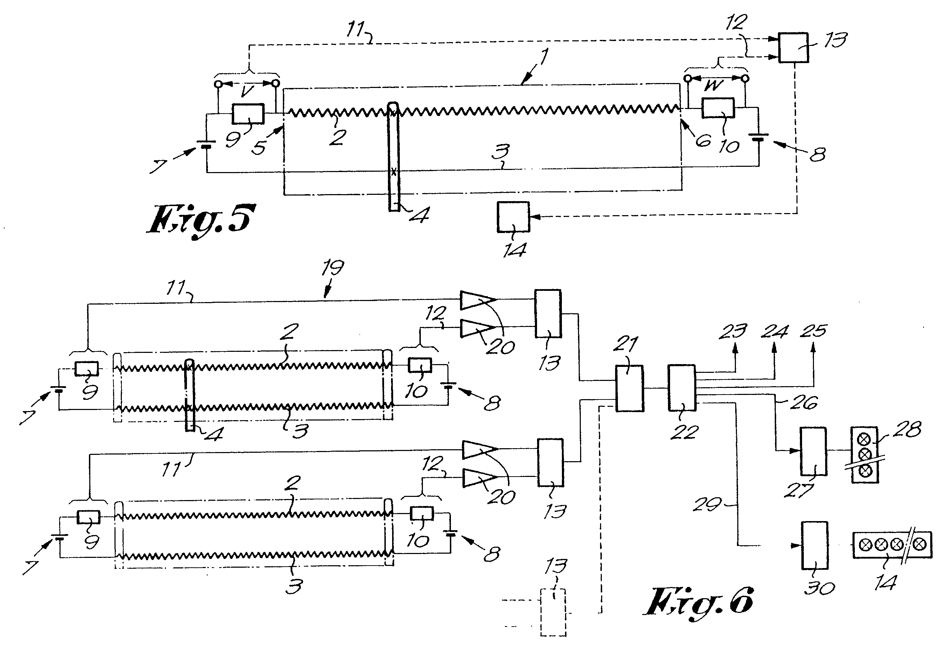

According to the method and/or the device of the present invention, the layout illustrated on figure 2 is preferably foreseen. In this case, the contact element 1 comprises two resisting electrodes 2 and 3 that will be connected on a well determined location when one slat 4 is fallen in the case of a warp break. According to this layout, voltages U that are preferably of the same value are applied at both ends 5 and 6 of the contact element 1, for instance, by means of voltage sources 7 and 8. At each end 5 and 6 of the contact element 1, a measurement device, respectively 9 and 10 is foreseen with connection in series with one of the electrodes 2 or 3, in such a way that each measurement device supplies an output signal that is proportional with the electrical currents I and I' occurring at the respective ends 5 and 6 of the contact element 1 in the electrodes 2 and 3. In the most simple embodiment these measurement devices 9 and 10 are composed of amperemeters. Preferably, however, use is made of measurement devices 9 and 10, the output signals of which can be supplied through measurement lines 11 and 12 to a computing and control unit 13. This unit 13 actuates in turn an indicator 14 or similar.

The actual functioning of the aforesaid layout will be clearly understood by looking at the electrically equivalent circuits of figures 3 and 4. In this case, the resistance having the A and B values are representing the electrodes 2 and 3 while the R value corresponds to the common resistance of the contact resistances 15 and 16 occurring as a consequence of the contacts between the slat 4 and the electrodes 2 and 3 respectively.

If the total length of the electrodes 2 and 3 is chosen equal to 1 and if X is the distance from for instance the left side to the middle tapping composed of the warp detector slat 4, the diagram of figure 4 can easily be obtained from the diagram of figure 3. Quite obviously, if a warp detector slat 4 is fallen in this case two current circuits respectively 17 and 18 are created. The balance equation in these circuits can be written as follows:

$$U = (A + B)X.I + (I + I')R$$

and

$$U = (A + B)(1 - X)I' + (I + I')R.$$

By comparing these two expressions, we get the following result:

$$X = I'/(I + I')$$

This relation clearly indicates that the present device and/or method offers the advantage that the distance X only results from the ratio between currents, whereby the R value is not at all important. The total contact resistance R may thus have any arbitrary value without any influence on the measurement results and thus on the indication about the location of the fallen slat.

The aforesaid calculations are carried out in the computing and control unit 13. There are a large number of electronic devices able to carry out this task. In function of the calculated result, a control signal is supplied to the indicator 14. This indicator 14 may have quite different designs. According to a first embodiment it is composed of a row of signal lamps or leds mounted along the warp detector, whereby the signal lamp located in the area of the fallen warp detector slat will be lit in function of the control signal.

According to another embodiment, the indicator 14 may be composed, for instance, of a display where the aforesaid value X or a value proportional with this latter one are indicated. In function of this value, a distance scale reproduced near the warp detector can easily indicate the location of the fallen slat.

Quite obviously, the direct application of the I and I' values is impossible in a lot of cases. Figure 5 is thus illustrating still another embodiment, whereby the measurement devices 9 and 10 are mainly composed of detection resistances, whereby the voltages V and W are measured on this resistance and/or supplied to the computing and control unit 13. Quite obviously the values of the currents I and I' can be determined from the V and W values. The location of the fallen slat can be determined afterwards in the same way as in the previous method.

Figure 5 also clearly indicates that it is quite sufficient that one electrode, in the present case the electrode 2, is made of a material having an electrical resistance. It should be remarked in this respect that the term "electrical resistance" has only a relative meaning. If the measurement devices are sufficiently accurate and if the connections are also sufficiently accurate, the invention can indeed be also put into practice with warp detectors comprising conventional electrodes in copper, steel or similar materials, whereby the resistance values A and B can be very low.

According to an alternative solution which is not illustrated in the figures, the voltages U can be borrowed from a common voltage source. Moreover, the voltages U may be either alternative voltages or direct voltages.

Figure 6 is schematically illustrating a practical embodiment, whereby the warp detector device 19 is made of several rows of slats and corresponding electrodes. The signals of the measurement devices 9 and 10 are supplied through amplifiers 20 to the computing and control units 13, the control signals of which are sent through an analogue-digital convertor 21 into a micro-processor 22. This micro-processor 22 can, for instance, stop the weaving loom through the outputs 23, 24 and 25, actuate an automatic repair unit, supply information to a central computer located in a weaving room, etc. An indicator 28 can be actuated through an output 26 and a control stage 27 in order to indicate in which row the fallen slat is located. Through an output 29 and a control stage 30, an indicator 14 can be actuated as already described in order to indicate on which distance X the fallen slat 4 is located.

According to an alternative solution of the embodiment illustrated on figure 6, one indicator 14 is foreseen for each slat row. This layout makes possible, in the case that several slats are nearly simultaneously falling on different electrodes, to determine their respective locations.

If several slats are falling on the same electrode, the devices described hereabove will still be running. However, the distance X which will be indicated is located between the fallen slats. Taking into account the fact that the slats are not simultaneously falling, this problem can be solved in the following way. At the moment that the first slat is falling a first measurement is carried out. Afterwards, the measurement is repeated with determined time intervals. If the result is always identical, such means that only one slat is fallen. If the result is changing, this indicates that two or several slats did fall. From the first measurement result, it is possible to determine the location of the first slat as already described, while from the second measurement result combined with the first measurement result, it is possible to determine the location of the second slat by using the formulas of the electrical current theory.

This method can be put into practice further on in a similar way for several slats. The different computed results can be supplied in an adequate way to the indicator 14 in order to accurately indicate all locations where a warp break did occur.

The present invention is by no means limited to the layouts described by way of examples and illustrated on the figures, but the method and the device of the present invention can be put into practice according to several alternative solutions without departing from the scope of the invention.

**Claims**

1. Method for determining the location of a warp break in weaving looms, whereby use is made of a warp detector composed of a contact element (1) that is made of two parallel electrodes (2,3) and several warp detector slats (4) which are suspended to the warp threads and which can fall in the case of a warp thread break on the aforesaid contact element (1) in order to achieve an electrical contact between the electrodes (2,3) and comprising the application of a voltage between the electrodes (2, 3) of the said contact element (1), characterised in that it comprises the application of said voltage U between the electrodes (2,3) on each end (5,6) of the contact element (1), whereby current circuits (17,18) are created at both sides of a fallen warp detector slat (4), the direct or indirect determination of the values of the currents I and I' in said current circuits (17,18) and/or values proportional to these currents, and the calculation from these values of the location of the fallen warp detector slat (4).

2. Method according to claim 1, characterised in that the steps of claim 1 are repeated at least once after that the location of a first fallen slat (4) has been determined in order to determine the location of possible additional fallen slats.

3. Method according to claims 1 or 2, characterised in that the calculation of the location of a fallen warp detector slat (4) is carried out following the ratio between the current in one of the aforesaid circuits (17,18) and the total of both currents and/or following the ratio of values proportional to these currents.

4. Method according to claims 1, 2 or 3, characterised in that equal voltages U are applied to the electrodes (2,3) at both ends (5,6) of the contact element (1).

5. Method according to any one of the previous claims, characterised in that the currents I,I' are indirectly determined by means of a voltage measurement V,W on the detection resistance included respectively in the aforesaid current circuits (17,18).

6. Device for putting into practice the method according to claim 1, comprising a contact element (1) made of two parallel electrodes (2,3); several warp detector slats (4), one or several of which can connect the electrodes (2,3) in fallen condition; and at least one voltage source (7,8) to which said electrodes (2,3) are connected, characterised in that each end (5,6) of the contact element (1) is connected to said voltage source (7,8); measurement devices (9,10) which are connected in series at both ends (5,6) of the contact element (1) with one of the electrodes (2,3) and which are each supplying an output signal proportional with the electrical currents I,I' occurring at the respective ends (5,6) of the contact element (1) in the electrodes (2,3); and a computing and control unit (13) for interpreting both aforesaid output signals and to supply a control signal in function of the location of the fallen slat (4).

7. Device according to claim 6, characterised in that at least one of the electrodes (2,3) is made of a material having an electrical resistance A,B.

8. Device according to claim 7, characterised by the fact that the electrode resistance is comprised between 5000 ohm/m and 1 megaohm/m.

9. Device according to claim 7, characterised in that the ratio of the electrode resistance to the normal contact resistance between the slat and the electrode is approximatively equal to 1/10.

10. Device according to claims 6 or 7, characterised in that the measurement devices (9,10) that are connected in series with the electrodes (2,3) are composed of detection resistances whereon a voltage measurement is carried out.

11. Device according to any one of the claims 6 to 10, characterised in that the computing and control unit (13) is connected to an indicator (14).

**Revendications**

1. Méthode de localisation d'une rupture de chaîne dans des métiers à tisser, utilisant un détecteur de chaîne constitué d'un élément de contact (1) consistant en deux électrodes parallèles (2, 3) et en plusieurs lattes de détecteur de chaîne (4) suspendues aux fils de chaîne et pouvant tomber, en cas de rupture de chaîne, sur l'élément de contact (1) précité, de manière à établir un contact électrique entre les électrodes (2,3), et comprenant l'application d'une tension entre les électrodes (2,3) de l'élément de contact (1) précité, caractérisée par le fait qu'elle comprend l'application de la tension précitée U entre les électrodes (2,3) placées à chaque extrémité (5,6) de l'élément de contact (1), créant des circuits de courant (17, 18) de chaque côté d'une latte de détecteur de chaîne tombée (4), la détermination directe ou indirecte des valeurs des courants I et I' dans les circuits de courant (17, 18) précités et/ou des valeurs proportionnelles à ces courants, et le calcul, à partir de ces valeurs, de la localisation de la latte de détecteur de chaîne tombée (4).

2. Méthode selon la revendication 1, caractérisée par au moins une répétition des étapes selon la revendication 1 après la localisation d'une première latte tombée (4), de manière à localiser d'autres lattes qui seraient éventuellement tombées.

3. Méthode selon les revendications 1 ou 2, caractérisée par le calcul de la localisation d'une latte de détecteur de chaîne (4) tombée en fonction du rapport entre le courant passant dans un des circuits (17, 18) précités et le total des deux courants et/ou en fonction du rapport entre valeurs proportionnelles à ces courants.

4. Méthode selon les revendications 1, 2 ou 3, caractérisée par l'application de tensions égales U aux électrodes (2,3) aux deux extrémités (5, 6) de l'élément de contact (1).

5. Méthode selon l'une des revendications précédentes, caractérisée par la détermination indirecte des courants I et I' au départ d'une mesure de tension V, W sur la résistance de détection incorporée dans les circuits de courant précités (17, 18), respectivement.

6. Dispositif de mise en oeuvre de la méthode selon la revendication 1, comprenant un élément de contact (1) consistant en deux électrodes parallèles (2, 3); plusieurs lattes de détecteur de chaîne (4), dont une ou plusieurs peuvent établir une connexion entre les électrodes (2, 3) en condition tombée; et au moins une source de tension (7, 8) à laquelle sont reliées les électrodes (2,3) précités, caractérisé par la connexion de chaque extrémité (5, 6) de l'élément de contact (1) à la source de tension (7, 8) précitée; des appareils de mesure (9, 10) connectés en série aux deux extrémités (5, 6) de l'élément de contact (1) avec une des électrodes (2, 3) et émettant chacun un signal de sortie proportionnel aux courants électriques I, I' créés aux extrémités (5, 6) respectives de l'élément de contact (1) dans les électrodes (2, 3); et une unité de calcul et de commande (13) interprétant les deux signaux de sortie précités et émettant un signal de contrôle en fonction de la localisation de la latte tombée (4).

7. Dispositif selon la revendication 6, caractérisé par le fait qu'au moins une des électrodes (2, 3) est réalisée en une matière qui offre une résistance électrique A, B.

8. Dispositif selon la revendication 7, caractérisé par le fait que la résistance de l'électrode est comprise entre 5000 ohm/m et 1 mégohm/m.

9. Dispositif selon la revendication 7, caractérisé par le fait que le rapport de la résistance de l'électrode à la résistance de contact normale entre la latte et l'électrode est approximativement égal à 1/10.

10. Dispositif selon les revendications 6 ou 7, caractérisé par le fait que les appareils de mesure (9, 10) connectés en série aux électrodes (2, 3) sont composés de résistances de détection sur lesquelles on mesure une tension.

11. Dispositif selon l'une des revendications 6 à 10, caractérisé par le fait que l'unité de calcul et de commande (13) est connectée à un indicateur (14).

## Ansprüche

1. Ein Verfahren zum Ermitteln der Stelle eines Kettfadenbruchs auf Webmaschinen, wobei Gebrauch gemacht wird von einem Kettfadenwächter, bestehend aus einem Kontaktelement (1) mit zwei parallelen Elektroden (2, 3) und mehreren Kettfadenwächterlamellen (4), die an den Kettfäden suspendiert sind und im Fall eines Kettfadenbruchs auf das zuvor erwähnte Kontaktelement (1) herabfallen können, um einen elektrischen Kontakt zwischen den Elektroden (2, 3) zu bewirken und wobei eine Spannung zwischen den Elektroden (2, 3) des erwähnten Kontaktelements (1) angelegt wird, gekennzeichnet dadurch, daß, es zusammengesetzt ist aus dem Anlagen der erwähnten Spannung U zwischen den Elektroden (2, 3) an jedem Ende (5, 6) des Kontaktelements (1), wobei an beiden Seiten einer gefallenen Kettfadenwächterlamelle (4) Stromkreise (17, 18) erzeugt werden, dem direkten oder indirekten Ermitteln der Stromwerte I und I' der erwähnten Stromkreise (17, 18) und/oder Werten proportional zu diesen Stromwerten und der Berechnung anhand dieser Werte der Stelle der gefallenen Kettfadenwächterlamelle (4).

2. Das Verfahren gemäß Anspruch 1, gekennzeichnet dadurch, daß, die Schritte in Anspruch 1 mindestens einmal wiederholt werden, nachdem die Stelle einer ersten gefallenen Lamelle (4) ermittelt wurde, um die Stelle eventueller anderer gefallener Lamellen zu ermitteln.

3. Das Verfahren gemäß, Anspruch 1 oder 2, gekennzeichnet dadurch, daß, die Berechnung der Stelle einer gefallenen Kettfadenwächterlamelle (4) entsprechend dem Verhältnis zwischen dem Stromwert in einem der zuvor erwähnten Stromkreise (17, 18) und dem Gesamtwert beider Stromwerte erfolgt und/oder entsprechend dem Verhältnis von Werten proportional zu diesen Stromwerten.

4. Das Verfahren gemäß Anspruch 1, 2 oder 3, gekennzeichnet dadurch , daß, gleichwertige Spannungen U an die Elektroden (2, 3) an beiden Enden (5, 6) des Kontaktelements (1) angelegt werden.

5. Das Verfahren gemaß, einem der vorgenannten Ansprüche, gekennzeichnet dadurch, daß, die Stromwerte I, I' indirekt durch eine Spannungsmessung V, W am Detektorwiderstand ermittelt werden, der jeweils in den zuvor erwähnten Stromkreisen (17, 18) enthalten ist.

6. Eine Vorrichtung um das Verfahren gemäß, Anspruch 1 anzuwenden, bestehend aus einem Kontaktelement (1) mit zwei parallelen Elektroden (2, 3); mehreren Kettfadenwächterlamellen (4), von denen eine oder mehrere in gefallenem Zustand die Elektroden (2, 3) schalten können; und mindestens einer Spannungsquelle (7, 8). an die die erwähnten Elektroden (2, 3) angeschlossen sind, gekennzeichnet dadurch, daß, jedes Ende (5. 6) des Kontaktelements (1) an die erwähnte Spannungsquelle (7, 8) angeschlossen ist; Meßgeräten (9, 10), die an beiden Enden (5, 6) des Kontaktelements (1) in Serie an eine der Elektroden (2, 3) angeschlossen sind und von denen jedes ein Ausgangssignal erzeugt, das proportional zu den elektrischen Stromwerten I,I' ist, die an den entsprechenden Enden (5, 6) des Kontaktelements (1) in den Elektroden (2, 3) auftreten; und einer Rechen- und Steuereinheit (13), um die beiden zuvor erwähnten Ausgangssignale auszuwerten und in Abhängigkeit von der Stelle der gefallenen Lamelle (4) ein Steuersignal zu erzeugen.

7. Die Vorrichtung gemäß Anspruch 6, gekennzeichnet dadurch, daß, mindestens eine der Elektroden (2, 3) aus einem Material gefertigt ist, das einen elektrischen Widerstand A, B besitzt.

8. Die Vorrichtung gemäß Anspruch 7, gekennzeichnet dadurch, daß, der Elektrodenwiderstand zwischen 5000 Ohm/m und 1 Megaohm/m liegt.

9. Die Vorrichtung gemäß Anspruch 7, gekennzeichnet dadurch, daß, das Verhältnis des Elektrodenwiderstands zum normalen Kontaktwiderstand zwischen der Lamelle und der Elektrode ungefähr 1/10 beträgt.

10. Die Vorrichtung gemäß Anspruch 6 oder 7, gekennzeichnet dadurch, daß, die Meßgeräte (9, 10), die in Serie an die Elektroden (2, 3) angeschlossen sind, aus Detektionswiderständen bestehen, auf welchen eine Spannungsmessung vorgenommen wird.

11. Die Vorrichtung gemäß einem der Ansprüche 6 bis 10, gekennzeichnet dadurch, daß, die Rechen- und Steuereinheit (13) an ein Anzeigeinstrument (14) angeschlossen ist.

*Fig.1*

*Fig.2*

*Fig.3*

*Fig.4*

Fig.5

Fig.6